# EUROPEAN PATENT SPECIFICATION

(11) **EP 3 664 627 B1**
(45) Date of publication and mention of the grant of the patent: **27.03.2024**
(21) Application number: 18746979.6
(22) Date of filing: 08.08.2018
(51) Int. Cl.: A23L 2/56, C12G 3/06, C12C 3/00, C12C 5/02, A23L 27/24

(54) **'HIGH' FLAVOURED BEVERAGE COMPONENT, USE THEREOF AND METHOD OF PREPARING SUCH BEVERAGE COMPONENT**
STARK AROMATISIERTER GETRÄNKEBESTANDTEIL, VERWENDUNG DAVON UND VERFAHREN ZUR HERSTELLUNG EINES SOLCHEN GETRÄNKEBESTANDTEILS
COMPOSANT DE BOISSON "HAUTEMENT" AROMATISÉ, SON UTILISATION ET PROCÉDÉ DE PRÉPARATION D'UN TEL COMPOSANT DE BOISSON

(30) Priority: 08.08.2017 BE 201705548
(43) Date of publication of application: 17.06.2020
(73) Proprietor: Anheuser-Busch InBev S.A., 1000 Brussels (BE)
(72) Inventor: SOUFFRIAU, Ben, 3000 Leuven (BE); MALCORPS, Philippe, 3000 Leuven (BE); DAENEN, Luk, 3000 Leuven (BE)
(74) Representative: Marks & Clerk LLP
(86) International application number: PCT/EP2018/071475
(87) International publication number: WO 2019/030266

(56) References cited:
- WO-A1-2013/099535
- DE-A1-102004 056 847
- US-A- 3 113 029
- US-A- 4 810 505
- US-A1- 2010 310 715

## Description

### FIELD OF THE INVENTION

The present invention concerns a method of preparing a fermented beverage having a relatively strong hop based flavour profile, in particular allows for a relatively high biotransformation of hop flavour precursors to odourant and volatile flavours. The present invention further also concerns such 'high' flavoured beverage component as well as the use thereof.

### BACKGROUND TO THE INVENTION

The present invention concerns a method of preparing a fermented, hop flavoured beverage component that, as an example, can be used in preparing beverages by mixing one or more beverage components with a beverage base such as water or beer, in particular, the invention aims at a beverage component having a high concentration of volatile flavour components originating from hops.

Research has shown that hops contain far more flavour components than the ones extracted during dry hopping of beer. However, a large part of the flavour components are chemically bound to entities in the hop and/or are present as flavour precursors in a non-volatile and non-odourant form that has to be released and/or converted into a volatile and odourant form resulting in effectively flavouring beer. These hop flavour precursors can be chemically assigned to two major types: S-conjugates of thiol and glycoside conjugates of aglycones.

Conversion of S-conjugate precursors and glycoside conjugate precursors to, respectively, volatile and odourant thiols and aglycones can be performed by brewer's yeast in the fermentation tank, however in case of adding hops to the fermentation tank in a late stage of fermentation or even during maturation, as is common practice in dry hopping processes, no or insufficient viable yeast is present to perform effective conversion of the hop flavour precursors. In case one would add aromatic hops in an earlier stage of fermentation when sufficient viable yeast is present, the yeast biotransformation is thought to release less than 5% of the available hop aromas.

US 4,810,505 A discloses a process of producing a carbonated hop-malt beverage in which a wort concentrate is produced from malt extract, hop concentrate and yeast by heat treatment, fermentation, filtration and pasteurization.

DE 10 2004 056847 A1 discloses a beer produced from barley, barley malt, wheat, wheat flour, corn, rice or other cereals. The hop products are umbels hop, hop powder, pellets, hop extracts and/or their mixing and isomerization products.

US 3,113,029 A discloses a process for the manufacture of beer in two stages: (a) producing a hopped malt extract constituting a dilutable beer concentrate; and, (b) adding carbonated water to the beer concentrate during the bottling operation.

WO 2013/099535 A1 discloses a method for producing a fermented malt beverage using hop as a starting material in which the hop is moderately heated to provide an enhanced hop aroma.

US 2010/310715 A1 discloses a concentrated hopped wort for the production of Czech beer.

It will be appreciated from the above that there remains a market need for improving the efficiency and the perhaps even more importantly the potential of dry hopping in terms of the diversity of type and amount of flavours to be added to beer.

### SUMMARY OF THE INVENTION

The present invention addresses the above market need by providing a method allowing to unlock a whole class or range of currently overlooked flavours provided to the beer during dry hopping. The present invention is defined in the appended independent claims. Preferred embodiments are defined in the dependent claims.

In particular, the invention concerns a method for preparing a beverage component, the method comprising the steps of:
(a) Providing an aqueous suspension comprising at least 1,5 g/l, preferably at least 3g/l, most preferably at least 5 g/l hops or hop products and fermentable carbohydrates;
(b) Fermenting the aqueous suspension with a yeast to obtain the beverage component, characterized in that the aqueous suspension comprises an amount of free amino nitrogen (FAN) of less than 11ppm FAN/°Pl, preferably less than 6ppm FAN/°Pl, most preferably less than 4.5ppm

FAN/°Pl, at the start of fermentation and/or that aqueous suspension comprises an amount of free amino nitrogen (FAN) of less than 180ppm, preferably less than 100ppm, most preferably less than 85ppm.

While in a regular beer fermentation, the yeast biotransformation of is thought to release less than 5% of the available hop aromas S-conjugate precursors and glycoside conjugate precursors to, respectively, volatile and odourant thiols and aglycones is low, it has been surprisingly observed that when adding hops or hop products and in particular CO₂ extracted hops to a fermentation broth with a low FAN availability for the yeast, biotransformation of S-conjugate precursors and/or glycoside conjugate precursors to volatile and odourant thiols and/or aglycones is increased, allowing preparation of highly flavoured beverage components. Such beverage component can be dosed/mixed in/with a beverage or diluent to alter the taste profile of a beverage.

In a preferred method of the invention, the aqueous suspension comprises less than 30ppm iso-alfa-acids, preferably less than 20ppm iso-alfa-acids, most preferably less than 15ppm at the start of fermentation.

The hop or hop products, in particular CO₂ extracted hops, preferably have an alfa-acids content of maximally 3 w%, preferably maximally 2 w%.

The fermentation preferably is performed under low-oxygen or anaerobic conditions.

The hops can be provided in the aqueous solution as extracted hops, total hops, hop pellets, hop extracts [preferably CO₂ extracted hops and most preferably supercritical CO₂ extracted hops], spent hops and or mixtures thereof.

According to a preferred method, the aqueous suspension has an original extract in the range of 10 - 25°Pl.

The source of fermentable carbohydrates is preferably selected from the group comprising: cereal, malt, wort, fermented beer, apple juice, high maltose syrup, high glucose syrup and/or mixtures thereof, more preferably, the sugar source comprises a mixture of mashed malt and high maltose syrup (HMS) in a malt/HMS ratio of 50/50 or less.

In some cases boiling of the aqueous suspension before fermentation is preferred, while the acidity of the aqueous suspension during suspension of the hop material in the aqueous suspension preferably ranges between a pH of 2 and 7 or even better between 2 and 5.

Finally the invention concerns the use of a beverage component obtained by a method as described above or having a composition in line with the above requirements for preparing a beverage.

### BRIEF DESCRIPTION OF THE FIGURES

Figure 1 shows a graph of the results of a sensory test for hop varietal effects of beverage components prepared by fermenting a hop suspension with varying amounts of free amino nitrogen (FAN) concentrations at the start of fermentation.
Figure 2 shows a graph of a sensory test for hop varietal effects of beverage components prepared by fermenting a hop suspension with varying amounts of free amino nitrogen (FAN) concentrations at the start of fermentation, in view of the pH of the beverage component.

### DEFINITIONS

For the sake of the present invention, CO₂ extracted hops are defined as the hop solids obtained after CO₂ extraction of hops, these CO₂ extracted hops typically are by-product of beer production.

Spent hops are defined as the hop solids that remain after a water extraction of hops at high temperature (above 80°C). An example of spent hops is the hop material that is filtered out of the wort after boiling when transferring the wort from the boiling vessel to the fermentation tank.

FAN or free amino nitrogen is a measure of the concentration of individual amino acids and small peptides (one to three units) which can be utilized by beer yeast for cell growth and proliferation. For the sake of this invention, ammonium salts, such as di-ammonium phosphate (DAP), and proline are not considered as FAN. FAN levels will be expressed in either absolute numbers (g/l) or in relative amounts as a ratio of FAN concentration per specific gravity of wort (expressed in degrees Plato) (ppm/°Pl).

The start of the fermentation (primary fermentation) is defined as the moment at which yeast is pitched in the wort to allow yeast propagation and, in a later stage, conversion of the sugars in the wort into alcohol.

For the sake of this invention iso-alfa acids are considered all iso-alfa acids and their derived products such tetrahydro-iso-alfa acids.

### DETAILED DESCRIPTION OF A PREFERRED EMBODIMENT

The present invention is based on the surprising effect of fermenting a fermentable carbohydrate suspension comprising a high load of CO₂ extracted hops but with a limited concentration of free amino acids in the suspension.

As mentioned in the background section, the biotransformation of aroma precursors to actual volatile and odourant compounds, in particular, aglycones, thiols and terpenes, during a regular beer fermentation is very low. However, it has now been found that when limiting the amount of FAN in the fermentation broth at the start of fermentation, biotransformation of the aroma precursors can be increased significantly.

The method according to the present invention essentially comprises of:
(a) providing an aqueous suspension (wort) of hops at a concentration of at least 1,5g/l, preferably at least 3g/l and most preferably at least 5g/l CO₂ extracted hops, fermentable carbohydrates (in particular glucose, maltose and maltotriose), and a relatively low concentration of free amino nitrogen (FAN) of less than 11ppm FAN/°Pl of the wort; and
(b) fermenting the above wort with a yeast, preferably a *Saccharomyces sp.*

In order to better control fermentation, it is preferred that the wort is boiled prior to fermentation.

The low FAN concentration in the wort can be achieved by using low amounts of malt and relative high amounts of adjuncts such as cereals (including corn, wheat, barley, rice, sorghum, oat and/or mixtures) thereof as sugar source, alternatively a high maltose syrup (HMS) and/or high glucose syrup can be used to (partially) replace the adjunct as sugar source. Other alternatives for the adjuncts as sugar source comprise, partially fermented beers, fruit juices such as apple juice and or mixtures of one or more of the adjuncts, HMS, high glucose syrup or other mentioned alternatives (for sake of clarity, the total amount of adjuncts, HMS, high glucose syrup or other mentioned alternatives is further addresses as non-malt sugar source). The ratio of malt/non-malt sugar source is preferably 50/50 or lower, even up to 0/100. The total amount of FAN/°Pl in the wort preferably ranges between 0,5 ppm/°Pl and 11ppm/°Pl, most preferably between 0,5 and 4,5°Pl.

Alternatively, low FAN concentration in the wort can be obtained by mashing malt without proteolysis step (which is typically done at 45-55°C). In such case, the mashing process starts with a mash-in at temperatures corresponding to a proteolytic rest temperature (typically 62-67°C, also referred to as amylase rest temperature). By omitting the proteolysis step, low FAN levels per degree Plato at higher malt percentage can be reached. Again, the total amount of FAN/°Pl in the wort preferably ranges between 0,5 ppm/°Pl and 11ppm/°Pl, most preferably between 0,5 and 4,5°Pl.

The hops or hop derivates can be chosen from both aromatic or high alpha hop cultivars or dual-purpose hop cultivars, in particular from one or more of the following hop varieties: Sorachi Ace, Nelson Sauvin, Tomahawk, Citra, Saaz, Mozaik, Centennial, Apollo, Taurus, Teamaker, Hercules, Magnum. In accordance with the present invention, the amount of hops present in the wort is at least 1,5g/l, preferably at least 3g/l and most preferably at least 5g/l. The hops can be added untreated to the wort or can be added as a spent hops or CO₂ extracted hops.

For the method of the invention it is preferred that the hops added to the wort are very low in alpha or are supercritical CO₂ extracted hops, such that the total amount of alfa-acids in the wort do not exceed 30ppm iso-alfa-acids, preferably less than 20ppm iso-alfa-acids, most preferably less than 15ppm at the start of fermentation. This allows reducing the bitterness of the resulting beverage component. To achieve the above maximum levels of iso-alfa-acids, it is preferred to use hop products having an alfa-acid content of below 3w%, preferably below 2w%.

The acidity of the wort at start of the fermentation preferably ranges between a pH of 7 and 2, most preferably between 5 and 2 as it is believed that low pH in the wort further improves hop varietal flavour effects.

The fermentation is preferably performed under low-oxygen or anaerobic conditions.

After fermentation the fermented liquid is collected that is addressed here as a beverage component. Optionally the beverage component can be filtered prior to use and/or the pH of the beverage component can be adjusted to a level ranging from 2,8 to 3,8, preferably to a level ranging from 3 to 3,5, more preferably 3 to 3,3, most preferably to a level of 3,2. Surprisingly, it has been found that acidifying the beverage or beverage component to a pH below 3,8 and preferably below 3,3 enhances the overall flavour stability and, even more surprisingly, the hop flavour stability. Where in regular strongly hopped or dry hopped beers, the hop flavour reduces after 1 to 2 months, the beverage or beverage component of the present invention, when acidified, is found to maintain its hop flavour for periods of over 12 months.

The beverage component prepared by a method according to the invention, preferably has a low bitterness and comprises an iso-alfa acid content of 15ppm or lower, preferably 10ppm or lower.

According to the present invention the beverage component can be used as a beverage as such or as a component to be mixed/dosed in another liquid such as beer, cereal based fermented liquids, cider, water and/or combinations thereof. The mixing ratio of the beverage component of the invention with another liquid can be chosen at will by the consumer, yet preferably ranges in a beverage component/liquid ratio of at least 20/80, or even at least 25/75, with a preferred range of 25/75 and 35/65.

To allow ageing of the beverage component, which in this case includes remediation of a potential unpleasant bitterness of the beverage or beverage component, it is preferred to allow the beverage component to an ageing in bottle, keg, wooden barrels, stainless steel tanks, etc. for 2-10 weeks.

### EXAMPLE

As an example, several batches of wort were prepared, each having a specific gravity of approximately 17,5°Pl. The batches were prepared such as to have different FAN concentrations ranging from about 370 mg/l (=21,1 ppm/°Pl) (=100w% malt extract) to 0mg/l (=0 ppm/°Pl) (0w% malt extract, 100w% HMS or high glucose syrup). In each of the wort batches 5g/l hops were added which roughly corresponds to approximately 4g/l CO₂ extracted hops. In this case the hop variety was the same for all batches, an Apollo hop

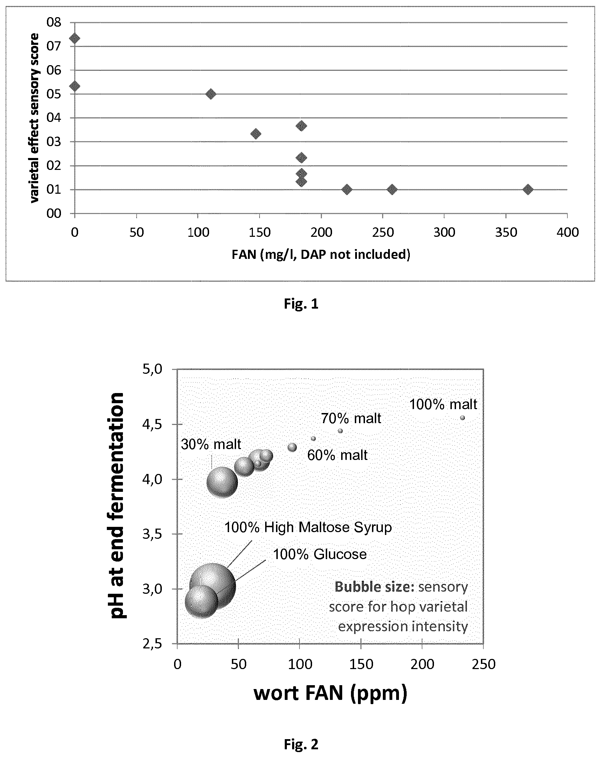

After fermentation, the fermented liquid of each batch was filtered to obtain a beverage component that was tasted by a sensory panel. The results of sensory test are shown in the graph of Fig. 1. This graph surprisingly shows the effect on the hop varietal flavour effects of low FAN levels in the wort at the start of fermentation, whereby improved hop varietal flavour effects were detected when the FAN levels in the wort at the start of fermentation were below 11ppm/°Pl, whereas these effects were absent with higher FAN levels. Hop varietal flavour effects reported by the sensory panel for the above beverage component include: lychee, tropical fruits, grapefruit, pineapple, citrusy, elderflower and sauvignon blanc.

It was further noticed that potential unpleasant bitterness of the beverage or beverage component can be remediated by ageing in bottle, keg, wooden barrels, stainless steel tanks, etc. for 2-10 weeks.

## Claims

1. A method for preparing a beverage component, the method comprising the steps of:
(a) Providing an aqueous suspension comprising at least 1.5 g/l, preferably at least 3g/l, most preferably at least 5 g/l hops or hop products; and, fermentable carbohydrates;
(b) Fermenting the aqueous suspension with a yeast to obtain the beverage component,
**characterized in that** the aqueous suspension comprises an amount of free amino nitrogen (FAN) of less than 11ppm FAN/°Pl, preferably less than 6ppm FAN/°Pl, most preferably less than 4.5ppm FAN/°Pl, at the start of fermentation and/or that aqueous suspension comprises an amount of free amino nitrogen (FAN) of less than 180ppm, preferably less than 100ppm, most preferably less than 85ppm.

2. The method according to claim 1, wherein the aqueous solution comprises less than 30ppm iso-alfa-acids, preferably less than 20ppm iso-alfa-acids, most preferably less than 15ppm at the start of fermentation.

3. The method according to claim 1 or 2, wherein the hop or hop products have an alfa-acids content of maximally 3 wt.%, preferably maximally 2 wt.%.

4. The method according to any of the preceding claims, wherein the hop or hop products are CO₂ extracted hops, in particular supercritical CO₂ extracted hops.

5. The method according to any of the preceding claims, wherein the fermentation is performed under low-oxygen or anaerobic conditions.

6. The method according to any of the preceding claims, wherein the fermentable carbohydrates originate from cereal, malt, wort, fermented beer, apple juice, high maltose syrup, high glucose syrup and/or mixtures thereof.

7. The method according to any of the preceding claims, wherein the fermentable carbohydrates comprise a mixture of mashed malt and high maltose syrup (HMS) in a malt/HMS ratio of 50/50 or less.

8. The method according to any of the preceding claims, wherein the amount of FAN in the aqueous solution at the start of fermentation comprises between 0.5 and 11ppm FAN/°Pl, preferably between 0.5 and 4.5ppm FAN/°Pl.

9. The method according to any of the preceding claims, wherein the pH of the aqueous solution at the start of the fermentation is between 7 and 2, preferably between 5 and 2.

10. The method according to any of the preceding claims, further comprising a step of adjusting the pH of the beverage component to a level ranging from 2.8 to 3.8, preferably to a level ranging from 3 to 3.5, more preferably 3 to 3.3, most preferably to a level of 3.2.

11. A beverage component prepared by a method according to any of claims 1 to 10, having an iso-alfa acid content of 15ppm or lower, preferably 10ppm or lower.

12. Use of a beverage component for preparing a beverage, optionally by mixing the beverage component with a liquid, wherein said component is prepared by the method according to any of claims 1 to 10, and wherein said component has an iso-alfa-acid content of 15 ppm or lower, preferably 10 ppm or lower.

13. The use according to claim 12, wherein said component is mixed with a liquid, the liquid being selected from the group consisting of: a beer or a cereal based fermented product, a cider, water, and combinations thereof.

14. The use according to claim 12 or 13, comprising mixing the beverage component with a liquid in a beverage component/liquid ratio of at least 20/80, preferably a ratio of at least 25/75, most preferably a ratio between 25/75 and 35/65.

## Patentansprüche

1. Verfahren zum Herstellen einer Getränkekomponente, wobei das Verfahren die folgenden Schritte umfasst:
(a) Bereitstellens einer wässrigen Suspension umfassend mindestens 1,5 g/l, bevorzugt mindestens 3 g/l, am bevorzugtesten mindestens 5 g/l Hopfen oder Hopfenprodukte; und fermentierbare Kohlehydrate;
(b) Fermentieren der wässrigen Suspension mit einer Hefe, um die Getränkekomponente zu erhalten,
**dadurch gekennzeichnet, dass** die wässrige Suspension eine Menge von freiem Aminostickstoff (FAN) von weniger als 11 ppm FAN/°P, bevorzugt weniger als 6 ppm FAN/°P, am bevorzugtesten weniger als 4,5 ppm FAN/°P zu Beginn der Fermentation umfasst und/oder dass die wässrige Substanz eine Menge von freiem Aminostickstoff (FAN) von weniger als 180 ppm, bevorzugt weniger als 100 ppm, am bevorzugtesten weniger als 85 ppm umfasst.

2. Verfahren nach Anspruch 1, wobei die wässrige Lösung weniger als 30 ppm Iso-alpha-Säuren, bevorzugt weniger als 20 ppm Iso-alpha-Säuren, am bevorzugtesten weniger als 15 ppm zu Beginn der Fermentation umfasst.

3. Verfahren nach Anspruch 1 oder 2, wobei der Hopfen oder die Hopfenprodukte einen Alpha-Säurengehalt von höchstens 3 Gew.-%, bevorzugt höchstens 2 Gew.-% aufweisen.

4. Verfahren nach einem der vorhergehenden Ansprüche, wobei der Hopfen oder die Hopfenprodukte CO₂-extrahierte Hopfen, insbesondere mit superkritischem CO₂ extrahierte Hopfen sind.

5. Verfahren nach einem der vorhergehenden Ansprüche, wobei die Fermentation unter Bedingungen von geringem Sauerstoff oder anaerobisch durchgeführt wird.

6. Verfahren nach einem der vorhergehenden Ansprüche, wobei die fermentierbaren Kohlehydrate aus Cerealien, Malz, Würze, fermentiertem Bier, Apfelsaft, Sirup mit hohem Maltosegehalt, Sirup mit hohem Glucosegehalt und/oder Mischungen davon stammen.

7. Verfahren nach einem der vorhergehenden Ansprüche, wobei die fermentierbaren Kohlehydrate eine Mischung von püriertem Malz und Sirup mit hohem Maltosegehalt (HMS) in einem Malz-/HMS-Verhältnis von 50/50 oder weniger umfassen.

8. Verfahren nach einem der vorhergehenden Ansprüche, wobei die Menge von FAN in der wässrigen Lösung zu Beginn der Fermentation zwischen 0,5 und 11 ppm FAN/°P, bevorzugt zwischen 0,5 und 4,5 ppm FAN/°P liegt.

9. Verfahren nach einem der vorhergehenden Ansprüche, wobei der pH-Wert der wässrigen Lösung zu Beginn der Fermentation zwischen 7 und 2, bevorzugt zwischen 5 und 2 liegt.

10. Verfahren nach einem der vorhergehenden Ansprüche, ferner einen Schritt des Einstellens des pH-Werts der Getränkekomponente auf ein Niveau im Bereich von 2,8 bis 3,8, bevorzugt auf ein Niveau im Bereich von 3 bis 3,5, noch bevorzugter 3 bis 3,3, am bevorzugtesten auf ein Niveau von 3,2 umfassend.

11. Getränkekomponente, hergestellt durch ein Verfahren nach einem der Ansprüche 1 bis 10, die einen Iso-alpha-Säuregehalt von 15 ppm oder geringer, bevorzugt 10 ppm oder geringer aufweist.

12. Verwendung einer Getränkekomponente zum Herstellen eines Getränks, wahlweise durch Mischen der Getränkekomponente mit einer Flüssigkeit, wobei die Komponente durch das Verfahren nach einem der Ansprüche 1 bis 10 hergestellt wird und wobei die Komponente einen Iso-alpha-Säuregehalt von 15 ppm oder geringer, bevorzugt 10 ppm oder geringer aufweist.

13. Verwendung nach Anspruch 12, wobei die Komponente mit einer Flüssigkeit gemischt wird, wobei die Flüssigkeit aus der Gruppe ausgewählt wird bestehend aus: einem Bier oder einem fermentierten Produkt auf Cerealienbasis, einem Most, Wasser und Kombinationen davon.

14. Verwendung nach Anspruch 12 oder 13, umfassend Mischen der Getränkekomponente mit einer Flüssigkeit in einem Verhältnis von Getränkekomponente/Flüssigkeit von mindestens 20/80, bevorzugt einem Verhältnis von mindestens 25/75, am bevorzugtesten einem Verhältnis zwischen 25/75 und 35/65.

## Revendications

1. Procédé de préparation d'un composant de boisson, le procédé comprenant les étapes consistant à :
(a) fournir une suspension aqueuse comprenant au moins 1,5 g/l, de préférence au moins 3 g/l, de manière davantage préférée au moins 5 g/l de houblons ou de produits de houblons ; et de glucides fermentables ;
(b) faire fermenter la suspension aqueuse avec une levure pour obtenir le composant de boisson,
**caractérisé en ce que** la suspension aqueuse comprend une quantité d'azote aminé libre (FAN) inférieure à 11 ppm FAN/°P, de préférence inférieure à 6 ppm FAN/°P, de manière davantage préférée inférieure à 4,5 ppm FAN/°P, au début de la fermentation et/ou cette suspension aqueuse comprend une quantité d'azote aminé libre (FAN) inférieure à 180 ppm, de préférence inférieure à 100 ppm, de manière davantage préférée inférieure à 85 ppm.

2. Procédé selon la revendication 1, dans lequel la solution aqueuse comprend moins de 30 ppm d'acides iso-alpha, de préférence moins de 20 ppm d'acides iso-alpha, de manière davantage préférée moins de 15 ppm au début de la fermentation.

3. Procédé selon la revendication 1 ou 2, dans lequel le houblon ou les produits de houblon présentent une teneur maximale en alpha-acides maximale de 3 % en poids, de préférence une teneur maximale de 2 % en poids.

4. Procédé selon l'une quelconque des revendications précédentes, dans lequel le houblon ou les produits de houblon sont des houblons extraits par CO₂, en particulier des houblons extraits par CO₂ supercritique.

5. Procédé selon l'une quelconque des revendications précédentes, dans lequel la fermentation est réalisée dans des conditions de faible teneur en oxygène ou anaérobies.

6. Procédé selon l'une quelconque des revendications précédentes, dans lequel les glucides fermentables proviennent de céréales, de malt, de moût, de bière fermentée, de jus de pomme, de sirop à teneur élevée en maltose, de sirop à teneur élevée en glucose et/ou de mélanges correspondants.

7. Procédé selon l'une quelconque des revendications précédentes, dans lequel les glucides fermentables comprennent un mélange de malt brassé et de sirop à teneur élevée en maltose (HMS) dans un rapport malt/HMS de 50/50 ou moins.

8. Procédé selon l'une quelconque des revendications précédentes, dans lequel la quantité de FAN dans la solution aqueuse au début de la fermentation comprend entre 0,5 et 11 ppm de FAN/°P, de préférence entre 0,5 et 4,5 ppm FAN/°P.

9. Procédé selon l'une quelconque des revendications précédentes, dans lequel le pH de la solution aqueuse au début de la fermentation est compris entre 7 et 2, de préférence entre 5 et 2.

10. Procédé selon l'une quelconque des revendications précédentes, comprenant en outre une étape consistant à ajuster le pH du composant de boisson à un niveau compris entre 2,8 et 3,8, de préférence à un niveau compris entre 3 et 3,5, de manière davantage préférée entre 3 et 3,3, de manière encore davantage préférée à un niveau de 3,2.

11. Composant de boisson préparé par un procédé selon l'une quelconque des revendications 1 à 10, présentant une teneur en acide iso-alpha de 15 ppm ou moins, de préférence de 10 ppm ou moins.

12. Utilisation d'un composant de boisson pour préparer une boisson, optionnellement en mélangeant le composant de boisson à un liquide, dans lequel ledit composant est préparé par le procédé selon l'une quelconque des revendications 1 à 10, et dans laquelle ledit composant présente une teneur en acide iso-alpha de 15 ppm ou moins, de préférence de 10 ppm ou moins.

13. Utilisation selon la revendication 12, dans laquelle ledit composant est mélangé avec un liquide, le liquide étant sélectionné dans le groupe constitué : d'une bière ou d'un produit fermenté à base de céréales, d'un cidre, de l'eau et des combinaisons de ceux-ci.

14. Utilisation selon la revendication 12 ou 13, comprenant le mélange du composant de boisson avec un liquide dans un rapport composant de boisson/liquide d'au moins 20/80, de préférence un rapport d'au moins 25/75, de manière davantage préférée un rapport compris entre 25/75 et 35/65.
